# EUROPEAN PATENT APPLICATION

(11) **EP 2 469 789 A1**
(43) Date of publication of application: **27.06.2012**
(21) Application number: 10196445.0
(22) Date of filing: 22.12.2010
(51) Int. Cl.: H04L 29/06, H04L 29/08

(54) **Method and system for selectively performing proxy services**

(71) Applicant: Research In Motion Limited, Waterloo, ON N2L 3W8 (CA)
(72) Inventor: Martin, Daryl Joseph, Waterloo Ontario N2L 5R9 (CA)
(74) Representative: Patel, Binesh

(57) **Abstract**

A method and system for selectively performing proxy services on a server are described. A communications device (201) is configured to transmit (402) requests for content to the server, and the server is configured to selectively perform (310) one or more proxy services, wherein the requests conform to a protocol. The disclosure provides a protocol request (450) that includes one or more network-status headers, wherein the one or more network-status headers include connection information (290) about the network connection used by the communications device (201) to transmit the protocol request. The server is configured (304) to perform a subset of the one or more proxy services based on the connection information (290).

## Description

### TECHNICAL FIELD

The present disclosure relates to the field of proxy services, and more specifically to the field of web accelerators for mobile devices.

### BACKGROUND

As web browsing became increasingly available on mobile devices, proxy servers and web servers were developed to improve browsing experiences by providing services ("proxy services") such as image transcoding, pre-fetching, JavaScript® compilation, and compression. These services may be performed on the web server or a proxy server to reduce data transmission, reduce device computation, or reduce user wait times.

With the development of mobile devices and the advancement of network access technologies, performing these services may not always be advantageous. For example, if a mobile device is connected to the network via Wi-Fi or a high speed cellular connection, performing image transcoding and compression on a proxy server may unnecessarily slow the transmission of requested data and add to server loads. However, if the mobile device is connected with a low speed cellular connection, performing some of the aforementioned proxy services may provide a better user experience.

It would be advantageous to provide a server and method for selectively providing proxy services based on the characteristics of a current network connection associated with a mobile device.

### BRIEF SUMMARY

In accordance with one aspect of the present disclosure, there is provided a method for selectively performing proxy services on a server before transmission of data to a communications device. The communications device is configured to transmit requests for content to the server, the server is configured to selectively perform one or more proxy services based on each request. In one example, the requests described in this disclosure conform to a protocol between the server and the communications device. The method may include receiving at the server a first protocol request from the communications device, the first protocol request including one or more network-status headers, wherein the one or more network-status headers indicate connection information; and configuring the server to enable a subset of the one or more proxy services based on the connection information.

In accordance with another aspect of the present disclosure, there is provided a method for a communications device to indicate or transmit connection information to a server that selectively performs proxy services. The method includes transmitting from the communications device to the server a first protocol request, the first protocol request including one or more network-status headers, wherein the one or more network-status headers indicate connection information; and receiving a first protocol response from the server.

In another aspect, the present application discloses a server for selectively performing proxy services for a communications device. The server includes a processor; memory; a communications module which, when executed by the processor, configures the processor to receive a protocol request from a communications device, the protocol request including one or more network-status headers, wherein the one or more network-status headers indicate connection information; and one or more proxy service modules which, when executed by the processor, configure the processor to perform one or more proxy services; wherein the processor is configured to selectively enable the one or more proxy services based on the connection information. In another aspect, the server may store in the connection information associated with the communications device in the memory.

In yet another aspect, the present application describes a communication device that receives content from a server in which proxy services are selectively performed. The communications device is configured to transmit requests for content to the server and the requests may conform to a protocol. The communication device includes a processor; a memory for storing connection information; a communication subsystem for sending and receiving communications with the server and for updating the connection information; and a protocol communications module which when executed configures the processor to send requests for content to the server, wherein the requests conform to a protocol, and the request includes one or more network-status headers, wherein the one or more network-status headers indicate the connection information.

### BRIEF DESCRIPTION OF THE DRAWINGS

Embodiments will now be described, by way of example only, with reference to the attached Figures, wherein:

Figure 1 is a block diagram of a communications system to which embodiments may be applied;

Figure 2 is a block diagram showing an example of a mobile device that can be used in the communications system of Figure 1;

Figure 3 shows, in flowchart form, an example method for selectively performing proxy services on a server for a communications device; and

Figure 4 is a flowchart of a communication between a mobile device, a proxy server and an application server.

Like reference numerals are used throughout the Figures to denote similar elements and features.

### DETAILED DESCRIPTION OF EXAMPLE EMBODIMENTS

Mobile device applications, such as Internet browsers, often communicate with servers to access data in the form of content or instructions. To access the data on the server, the application may send a number of requests over the Internet to the server. Generally, these applications send requests to servers using standard communication protocols. For example, an Internet browser (interchangeably called a "web browser") on a mobile device will often communicate with a web server using HyperText Transfer Protocol (HTTP) or Wireless Application Protocol (WAP).

A web browser using HTTP can generate numerous HTTP requests to load a single web page. Each HTTP request includes a URL request line and a number of headers which contain information that the web server may use to respond appropriately to the request. Each header includes a header field, followed by a single colon, and then a header value. Below is an non-limiting example of an HTTP header request. In this example, the header field for "Host" (also called the host header) has a value of "www.example.com."

GET /path/index.html HTTP/1.1
Accept: text/plain, text/html
Accept-Charset: ISO-8859-1, US-ASCII
Accept-Language: EN
Host: www.example.com
Content-Encoding: gzip
User-Agent: Mozilla/4.0 (compatible; MSIE 6.0; Windows NT 5.1)

While the examples described herein discuss HTTP headers, the present disclosure may apply to any protocol using headers including but not limited to Session Initiation Protocol (SIP), Real-time Transport Protocol (RTP), File Transfer Protocol (FTP), Simple Mail Transfer Protocol (SMTP), Simple Object Access Protocol (SOAP), and equivalents thereof. Furthermore, the protocol may comprise a protocol at an application layer, a session layer, a transport layer, or any other protocol layer in which a protocol request includes headers for conveying additional information with the request.

In some communication systems, protocol requests sent by communications devices such as the example HTTP request illustrated above are directed through a proxy server or proxy controller. A proxy server may forward a protocol request to the appropriate remote application, web service, or content server. If a protocol request is forwarded to a remote server, the remote server replies to the protocol request by sending a protocol response back to the proxy server which forwards the protocol response to the communications device. While acting as an intermediary between communication device clients and the application and content servers, a proxy server may be configured to perform a number of proxy services. It should be understood that a proxy server may be an intermediate server or may form part of a web server. In other implementations, proxy services are performed on a proxy server that is separate from the web server.

In this disclosure, "proxy services" or "proxy service" refers to any tool for improving browsing experience by caching, image transcoding, filtering, JavaScript compilation, pre-fetching, code reduction, video stream decoding, or compression, and may be referred to as web accelerators, compression services, or other terms known in the background for decreasing bandwidth or latency of web content delivered to a client browser. Another example of proxy services may include selection between versions of content that are available for client applications. For example, a proxy service may be implemented to retrieve one of several versions of an image for delivery to a client browser. It is not necessary for the proxy service to perform compression of an image if a previously-compressed version of the image may be retrieved by the proxy service.

In the following description, many of the described embodiments involve a mobile device communicating with a server over a wireless network. The present application may be particularly advantageous in a wireless networking situation due to the inherent possibility of changing network communication conditions on wireless networks and devices. Nevertheless, the present application is not necessarily limited to mobile devices and wireless communications and may be applicable more broadly to any communications device configured to send protocol requests to a server.

In this disclosure, the terms "mobile device", "device", "communications device", or "wireless device" should be understood to mean any device that communicates with a server over a wireless communications network. Therefore, a device may comprise a smartphone, computer, tablet, laptop, portable gaming device, or other devices that access content from a server using a protocol request over a network connection.

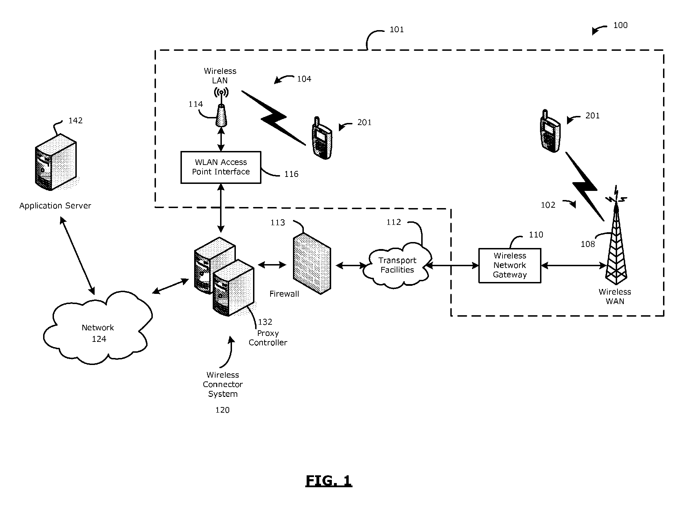

Reference is made to Figure 1, which shows, in block diagram form, an example communication system 100. The communication system 100 includes a mobile communication device ("mobile device") 201, which may be connected to the remainder of system 100 in any of several different ways. For illustrative purposes, two instances of mobile device 201 are depicted in Figure 1 each employing different example ways of connecting to system 100. In one example, mobile device 201 is connected to a wireless communication network 101, which may comprise one or more of a Wireless Wide Area Network (WWAN) 102, a Wireless Local Area Network (WLAN) 104, or any other suitable network arrangements. In some embodiments, the mobile device 201 is configured to communicate over both the WWAN 102 and WLAN 104, and to roam between these networks. In some embodiments, the wireless network 101 may comprise multiple WWANs 102 and WLANs 104 (for simplicity only one WWAN and one WLAN are illustrated in Figure 1). Other types of networks (not shown) may be used by the mobile device 201 to gain access to the communication system. For example, other types of networks may include short range radio frequency (RF) systems, wireless USB, optical communications systems, etc.

The WWAN 102 may be implemented as any suitable wireless access network technology. By way of example, but not limitation, the WWAN 102 may be implemented as a wireless network that includes a number of base stations 108 (one of which is shown in Figure 1), each containing radio transmitting and receiving equipment adapted to provide wireless radio-frequency (RF) network service or "coverage" to a corresponding area or cell. The WWAN 102 is typically operated by a mobile network service provider that may provide a subscription package to a user of mobile device 201. The WWAN 102 may be implemented as any appropriate wireless network, including, but not limited to, one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (HighSpeed Downlink Packet Access), IEEE 802.16e (also referred to as Worldwide Interoperability for Microwave Access or "WiMAX"), satellite communications system, radio systems, or many other wireless network technologies known to those of skill in the relevant art. Although WWAN 102 is described as a "Wide-Area" network, that term is intended herein also to incorporate wireless Metropolitan Area Networks (WMAN) and other similar technologies for providing coordinated service wirelessly over an area larger than that covered by typical WLANs.

Generally, third generation (3G) network technologies such as UMTS, and EvDO CDMA 2000 have higher peak data transmission rates than second generation (2G) networks technologies such as GSM and CDMA. Networks using HSPDA and WiMAX may have even higher data rates and are sometimes referred to as 3.5G or 4G networks. Data transfer rates are dependent on a number of factors including the type of network connection over which a mobile device 201 and a wireless network 101 are connected, the connection signal strength, and the capabilities of the device. Generally, stronger signal strengths allow for higher data transfer rates.

It should be apparent that combinations of different network technologies and network characteristics (such as signal strength) can be associated with predictably different data transmission rates.

Major urban centres are typically equipped with the latest, highest speed network technologies, while more rural areas are limited to slower network technologies using lower radio frequencies. Likewise, newer mobile phones generally have faster processors and wireless communication systems which allow them to send and receive data at higher data transfer rates using newer network technologies.

Newer mobile devices are often backward compatible and can connect to wireless networks over different radio frequencies and using different network technologies while older devices may have hardware and software components which only allow them to connect to older generation networks.

A wireless network gateway 110 may be associated with the WWAN 102 to connect the mobile device 201 to transport facilities 112, and through the transport facilities 112 to other portions of the communications system. The wireless network gateway 110 may provide an interface between an optional wireless connector system 120 and the WWAN 102. In one implementation, communications sent via the mobile devices 201 are transported via the WWAN 102 and the wireless network gateway 110 through transport facilities 112 to the wireless connector system 120. Communications sent from the wireless connector system 120 are received by the wireless network gateway 110 and transported via the WWAN 102 to the mobile devices 201.

Transport facilities may include one or more private networks or lines, the public internet, a virtual private network, or any other suitable network. The wireless connector system 120 may be operated, for example, by an organization or enterprise such as a corporation, university, or governmental department, which allows access to a network 124 such as an internal or enterprise network and its resources, or the wireless connector system 120 may be operated by a mobile network provider. In some embodiments, transport facilities 112 and/or network 124 may be realized using the Internet rather than an internal or enterprise network. It should be understood that the wireless connector system 120 is optional. In some implementations, the transport facilities 112 relay communications directly to network 124.

Turning to another example network connection, the mobile device 201 may be connected via WLAN 104. The WLAN 104 comprises a wireless network which, in some embodiments, conforms to IEEE 802.11x standards (sometimes referred to as Wi-Fi) such as, for example, any or all of the IEEE 802.11a, 802.11b, 802.11g, or 802.11n standards. Other communication protocols may be used for the WLAN 104 in other embodiments such as, for example, IEEE 802.16e (also referred to as Worldwide Interoperability for Microwave Access or "WIMAX"), or IEEE 802.20 (also referred to as Mobile Wireless Broadband Access). The WLAN 104 includes one or more wireless RF Access Points (AP) 114 (one of which is shown in Figure 1) that collectively provide WLAN service or coverage over an area.

The WLAN 104 may be a personal network of the user, an enterprise network, or a hotspot offered by an internet service provider (ISP), a mobile network provider, or a property owner in a public or semi-public area, for example. The access points 114 are connected to an access point (AP) interface 116, which may connect to the wireless connector system 120 directly (for example, if the access point 114 is part of an enterprise WLAN 104 in which the wireless connector system 120 resides), or indirectly (not shown) via the transport facilities 112 if the access point 14 is a personal Wi-Fi network or Wi-Fi hotspot (in which case, a mechanism for securely connecting to the wireless connector system 120, such as a virtual private network (VPN), may be desirable). The AP interface 116 provides translation and routing services between the access points 114 and the wireless connector system 120 to facilitate communication, directly or indirectly, with the wireless connector system 120.

If the communications system includes a wireless connector system 120, the wireless connector system 120 may be implemented as one or more servers, and may be located behind a firewall 113. The wireless connector system 120 manages communications, including e-mail messages, to and from a mobile device 201. The wireless connector system 120 also provides administrative control and management capabilities over users and mobile devices which may connect to the wireless connector system 120.

The wireless connector system 120 may allow the mobile device 201 to access the network 124 and gain access to resources and services such as a messaging server (for example, a Microsoft Exchange^{™}, IBM Lotus Domino^{™}, or Novell GroupWise^{™} email messaging server) or other application servers 142. In the context of the present disclosure, the term application server 142 encompasses both content servers for providing content such as internet content or content from an organization's internal servers, as well as servers for implementing server-based applications such as instant messaging (IM) applications.

In some implementations, the wireless connector system 120 may provide a secure communications protocol for exchanging data (e.g., e-mail messages, personal information manager (PIM) data, and IM data) with the mobile device 201. For example, communications between the wireless connector system 120 and the mobile device 201 may be encrypted.

An application running on a mobile device 201 may be in communication with one of more application servers 142 through one or more proxy controllers 132. In accordance with the present disclosure, a proxy controller 132 may be configured to selectively perform proxy services. In at least one embodiment, the proxy controller 132 is implemented through computer program instructions that reside on a persistent storage on the wireless connector system 120, and which are executed by one or more microprocessors. In at least one other embodiment, the proxy controller 132 is implemented through computer program instructions that reside on a persistent storage on the application server 142, and which are executed by one or more microprocessors. In various embodiments, the computer program instructions may comprise a number of proxy service modules which when executed by a microprocessor, configure the microprocessor to perform one or more proxy services. In some embodiments, each proxy service module configures one or more microprocessors to perform a different proxy service, while in other embodiments, some proxy service modules may configure one or more microprocessors to perform multiple proxy services.

In some embodiments, the proxy service modules are implemented as distinct modules each performing different functions. In other embodiments, the proxy service modules are implemented as parts of the operating system or other software applications.

The system shown in Figure 1 is but one possible configuration for a communications system in which embodiments of the present disclosure may be implemented. For example, a proxy controller 132 may be part of the wireless connector system 120, may reside at a different location on the network 124, or may reside at the same location as an application server 142. Alternatively, there may be no proxy controller, and the application server 142 itself may selectively perform proxy services 132 for one or more mobile electronic devices 201. In some embodiments, the proxy controller 132 could be implemented on a stand-alone proxy server (not shown) that is a separate computer than the wireless connector system 120 or the application server 142.

The wireless network gateway 110 is adapted to send data packets received from the mobile device 201 over the WWAN 102 to the wireless connector system 120. The wireless connector system 120 then sends the data packets to the appropriate connection via a proxy controller 132, or directly to an application server 142. Conversely, the wireless connector system 120 sends data packets received, for example, from the proxy controller 132 or application server 142 to the wireless network gateway 110 which then transmits the data packets to the destination mobile device 201. The AP interfaces 116 of the WLAN 104 provide similar sending functions between the mobile device 201, the wireless connector system 120 and network connection point such as the proxy controller 132 and application server 142.

The network 124 may comprise a private local area network, metropolitan area network, wide area network, the public internet or combinations thereof and may include virtual networks constructed using any of these, alone, or in combination.

It will be appreciated that the above-described communication system 100 is provided for the purpose of illustration only, and that the above-described communication system 100 comprises one possible communication network configuration of a multitude of possible configurations for use with the mobile device 201. The teachings of the present disclosure may be employed in connection with any other type of network and associated devices that are effective in implementing or facilitating wireless communication. Suitable variations of the communication system are intended to fall within the scope of the present disclosure.

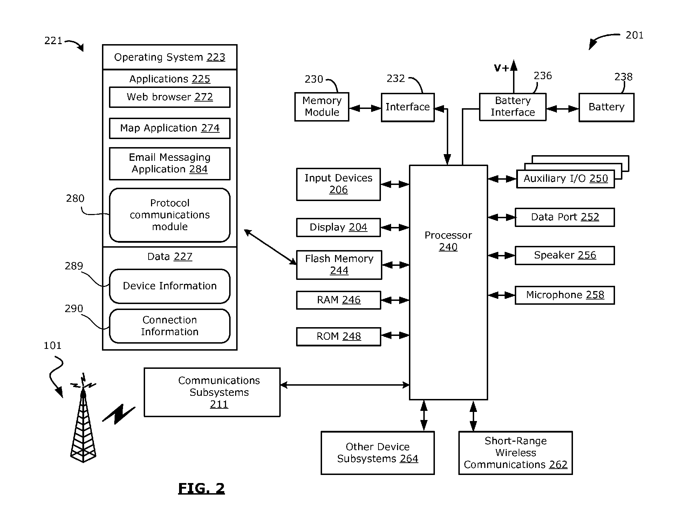

Reference is now made to FIG. 2 which illustrates a mobile device 201 in which example embodiments described in the present disclosure can be applied. The mobile device 201 is a two-way communication device having data and voice communication capabilities, and the capability to communicate with other computer systems, for example, via the Internet. Depending on the functionality provided by the mobile device 201, in various embodiments the device 201 may be a multiple-mode communication device configured for both data and voice communication, a smartphone, a mobile telephone or a PDA (personal digital assistant) enabled for wireless communication, or a computer system with a wireless modem.

The mobile device 201 includes a rigid case (not shown) housing the components of the device 201. The internal components of the device 201 are constructed on a printed circuit board (PCB). The mobile device 201 includes a controller comprising at least one processor 240 (such as a microprocessor) which controls the overall operation of the device 201. The processor 240 interacts with device subsystems such as a wireless communication subsystem 211 for exchanging radio frequency signals with the wireless network 101 to perform communication functions. The processor 240 interacts with additional device subsystems including a display screen 204 such as a liquid crystal display (LCD) screen, input devices 206 such as a keyboard and control buttons, flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, short-range communication subsystem 262, and other device subsystems generally designated as 264. Some of the subsystems shown in FIG. 2 perform communication-related functions, whereas other subsystems may provide "resident" or on-device functions.

The device 201 may comprise a touchscreen display in some embodiments. The touchscreen display may be constructed using a touch-sensitive input surface connected to an electronic controller and which overlays the display screen 204. The touch-sensitive overlay and the electronic controller provide a touch-sensitive input device and the processor 240 interacts with the touch-sensitive overlay via the electronic controller.

The mobile device 201 may communicate with any one of a plurality of fixed transceiver base stations 108 (Fig. 1) of the wireless network 101 within its geographic coverage area. The mobile device 201 may send and receive communication signals over the wireless network 101 after the required network registration or activation procedures have been completed.

The processor 240 operates under stored program control and executes software modules 221 stored in memory such as persistent memory, for example, in the flash memory 244. As illustrated in FIG. 2, the software modules 221 comprise operating system software 223 and software applications 225, which may include a web browser 272, a map application 274, and an email messaging application 284. In some example embodiments, the functions performed by each of the applications 272, 274, and 284 may each be realized as a plurality of independent elements, and any one or more of these elements may be implemented as parts of other software applications 225. In some example embodiments, one or more applications 225 are configured to send protocol requests to a proxy server 132 (Fig. 1), and to receive protocol responses from the same proxy server 132 (Fig. 1).

For illustration purposes, Figure 2 shows a protocol communications module 280. In some example embodiments, the protocol communications module 280 may be configured to format and send protocol requests and to receive protocol responses over the communications subsystem 211. In some embodiments, the protocol requests and responses may conform to HTTP or other similar protocols.

The protocol communications module 280 is configured to send connection information within a header of a protocol request. In some embodiments, the protocol communications module 280 may send connection information with each request. By sending connection information within a header of each protocol request, the proxy services can be selectively performed in accordance with this disclosure and in environments where connection speeds change often.

In some embodiments, the protocol communications module 280 is configured to detect a change in the connection information, and to only send connection information within the header of a protocol request if this information has changed since the last request was sent. This enables the proxy server to update the connection status of the device from which the requests are being made. In some embodiments, the proxy controller 132 could store and maintain the connection information based on identification of the connection with the device 201. In some embodiments, this connection identification could be based on an internet protocol address and port number. In other embodiments, the proxy controller 132 could store and maintain cached headers based on a unique device identifier.

Although the protocol communications module 280 is shown in Figure 2 as separate block, in many embodiments the functions of the protocol communications module 280 described above and detailed further below may form a part of any of the applications 225 or operations system 223, such as the web browser 272 or within the operating system 223 and not necessarily using a separate module or application. The present application contemplates all such implementations. It will be apparent to a person of skill in the art that protocol communications module 280 could form a part of any component of the mobile device 201 that handles communications according to a protocol.

The software modules 221 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

In some embodiments, the auxiliary input/output (I/O) subsystems 250 may comprise an external communication link or interface, for example, an Ethernet connection. The mobile device 201 may comprise other wireless communication interfaces for communicating with other types of wireless networks, for example, a wireless network such as an orthogonal frequency division multiplexed (OFDM) network or a GPS (Global Positioning System) subsystem comprising a GPS transceiver for communicating with a GPS satellite network (not shown). The auxiliary I/O subsystems 250 may comprise a pointing or navigational tool (input device) such as a clickable trackball or scroll wheel or thumbwheel, or a vibrator for providing vibratory notifications in response to various events on the device 201 such as receipt of an electronic message or incoming phone call, or for other purposes such as haptic feedback (touch feedback).

In some embodiments, the mobile device 201 also includes a removable memory card 230 (typically comprising flash memory) and a memory card interface 232. Network access typically associated with a subscriber or user of the mobile device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile device 201 in order to operate in conjunction with the wireless network 101.

The mobile device 201 also stores other data 227 in an erasable persistent memory, which in one example embodiment is the flash memory 244. In various embodiments, the data 227 includes service data comprising information required by the mobile device 201 to establish and maintain communication with the wireless network 101. The data 227 may also include user application data such as email messages, address book and contact information, calendar and schedule information, notepad documents, image files, and other commonly stored user information stored on the mobile device 201 by its user, and other data. The data 227 stored in the persistent memory (e.g. flash memory 244) of the mobile device 201 may be organized, at least partially, into a number of databases each containing data items of the same data type or associated with the same application. For example, email messages, contact records, and task items may be stored in individual databases within the device memory.

The data 227 stored in memory (volatile or non-volatile) may include device information 289 and connection information 290. In some embodiments, the device information identifies the hardware and software capabilities of the device 201. Hardware capabilities may include information about the device such as the processor speed, the amount of RAM, or the screen resolution. Software capabilities may include information about the device's operating system, firmware, or applications such as the type of web browser or Java software. In some embodiments, device information may be indicated using device model names and software versions which can be used to indirectly determine the device's hardware and software capabilities.

In some embodiments, the device information further identifies device settings, such as data usage settings, web browser settings, power or quality of service (QoS) settings. These settings may be set by a user, device, service provider, or corporate or group administrator. In some embodiments, the device settings may be used to provide additional information or overriding instructions to a proxy server or proxy controller determining whether to perform one or more proxy services. Device information may also include remaining battery power or memory free space. Device information may also include any hardware, software or setting information not specifically mentioned in the examples above.

Connection information identifies the current connection status of the device to the network. In some embodiments, the connection information may include the network technology with which the device 201 is connected to the wireless network 101 such as GSM, GPRS, EDGE, HSDPA or any other network technology. The connection information may also indicate if the mobile device 201 is connected to the network via Wi-Fi or a USB connection to a host computer.

In some embodiments, the connection information may include the generation of the network technology such as 2G, 3G, 3.5G, or 4G. In other embodiments, the connection information may include the peak data rates of the current network connection.

In some embodiments, the connection information further includes the current signal strength of the connection between the device 201 and the wireless network 201. The signal strength may be stored in any format such as decibels (dB), decibels referenced to one milliwatt (dBm), or any enumerated set such as a number of signal strength bars. Signal strength bars commonly represent ranges of dB or dBm values wherein more bars typically indicate stronger signal strength. Connection information may also include any information regarding the device's connection to a network not specifically mentioned in the examples above. Information described as device information may also be classified as connection information, and vice versa.

In accordance with one aspect of the present disclosure, the current connection information is updated by the communications subsystems 211 or any other component of the device 201 as the network connection, signal strength or other information changes. The current device information is also updated when there are changes to the settings, battery life, memory free space or any other device information.

The serial data port 252 may be used for synchronization with a user's host computer system (not shown). The serial data port 252 enables a user to set preferences through an external device or software application and extends the capabilities of the mobile device 201 by providing for information or software downloads to the mobile device 201 other than through the wireless network 101. The alternate download path may, for example, be used to load an encryption key onto the mobile device 201 through a direct, reliable and trusted connection to thereby provide secure device communication.

In some embodiments, the mobile device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their mobile device 201 to the host computer system via a USB cable or Bluetooth® connection, traffic that was destined for the wireless network 101 is automatically routed to the mobile device 201 using the USB cable or Bluetooth® connection. Similarly, any traffic destined for the wireless network 101 is automatically sent over the USB cable Bluetooth® connection to the host computer system for processing.

The mobile device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile device 201, and the battery interface 236 provides a mechanical and electrical connection for the battery 238. The battery interface 236 is coupled to a regulator (not shown) which provides power V+ to the circuitry of the mobile device 201.

The short-range communication subsystem 262 is an additional optional component which provides for communication between the mobile device 201 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices.

A predetermined set of applications that control basic device operations, including data and possibly voice communication applications will normally be installed on the mobile device 201 during or after manufacture. Additional applications and/or upgrades to the operating system 223 or software applications 225 may also be loaded onto the mobile device 201 through the wireless network 101, the auxiliary I/O subsystem 250, the serial port 252, the short-range communication subsystem 262, or other suitable subsystem 264. The downloaded programs or code modules may be permanently installed, for example, written into the program memory (i.e. the flash memory 244), or written into and executed from the RAM 246 for execution by the processor 240 at runtime. Such flexibility in application installation increases the functionality of the mobile device 201 and may provide enhanced on-device functions, communication-related functions, or both. For example, secure communication applications may enable electronic commerce functions and other such financial transactions to be performed using the mobile device 201.

The mobile device 201 may provide two or more modes of communication. For example a first mode may comprise a data communication mode and second mode may comprise a voice communication mode. A mobile device 201 may be a "dual mode" device which may have more than one mode associated with data communication, such as a first mode (GPRS) and a second mode (UTRAN). Mobile devices 201 may comprise additional antennas and/or communication subsystems as needed to support multiple modes or network technologies.

In a data communication mode, a received data signal such as a text message, an email message, or Web page download will be processed by the communication subsystem 211 and input to the processor 240 for further processing. For example, a downloaded Web page may be further processed by a browser application or an email message may be processed by the email messaging application and output to the display 204. A user of the mobile device 201 may also compose data items, such as email messages, for example, using the input devices in conjunction with the display screen 204. These composed items may be transmitted through the communication subsystem 211 over the wireless network 101.

In the voice communication mode, the mobile device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., the voice communication module) and hardware (i.e., the microphone 258, the speaker 256 and input devices). Alternative voice or audio I/O subsystems, such as a voice message recording subsystem, may also be implemented on the mobile device 201. Although voice or audio signal output is typically accomplished primarily through the speaker 256, the display screen 204 may also be used to provide an indication of the identity of a calling party, duration of a voice call, or other voice call related information.

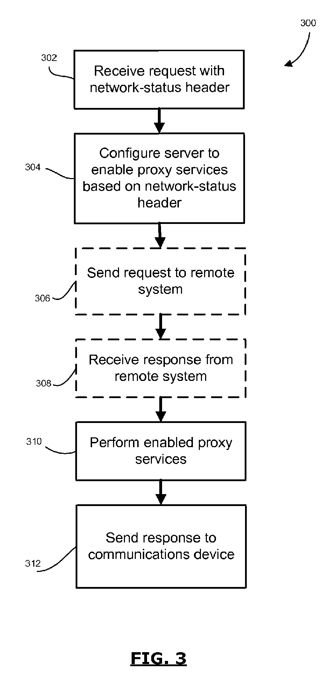

Reference is now made to Figure 3, in which a method 300 of selectively performing proxy services is described. In some embodiments, the communications device may comprise a mobile device. The communications device may be communicating with a proxy server or proxy controller over a wireless network. Method 300 is described as a method in a server, which may be a proxy server, application server, or any other server that selectively enables proxy services. It should be understood that a method in a mobile device is implied and method 300 could be applied to a mobile device by exchanging the words "send" and "receive" in the flowchart. For simplicity, the method 300 is described as a method in a server.

The method 300 begins with receipt of a protocol request at block 302. The protocol request is received at the server from the communications device. In some embodiments, the protocol request is directed to a remote system, such as a web server, applications server, or media content server. Other types of remote systems may be included in other embodiments. The protocol request includes a number of defined headers, wherein the defined headers are fields containing information or values populated by the communications device.

In accordance with the present disclosure, the protocol request received at the proxy server includes a network-status header. The network-status header contains connection information. The network-status header may include one or more flags, strings, values or other data that communicate connection information or settings to the server. For example, the network-status header may indicate the network technology (e.g. 3G, 4G) used by the communications device to transmit the protocol request, and may include signal strength indicators or estimated data rate information. In some embodiments, the network-status header may also contain device information. In some embodiments, the network-status header may also contain device settings associated with the connection information.

In some embodiments, the communication device is configured to send the network-status header with each protocol request. In other embodiments, the communication device is configured to only include the network-status header with a request when the connection or device information has changed since the previous request containing a network-status header was sent.

It should be understood that the connection information may be included in the protocol request in a number of ways known to those of skill in the relevant art. For example an application at "layer 7" of the OSI model may access a memory on the communication device to determine which network connection (at "layers 1-2") are active. Alternatively, the application may communicate the protocol request to a protocol stack of the communications device which inserts the connection information prior to transmitting the protocol request over a network.

A protocol request having an example network-status header is shown below:

GET /path/index.html HTTP/1.1
Accept: text/plain, text/html
Accept-Charset: ISO-8859-1, US-ASCII
Accept-Language: EN
Host: www.example.com
Content-Encoding: gzip
User-Agent: Mozilla/4.0 (compatible; MSIE 6.0; Windows NT 5.1)
x-network-status: 3G; good signal

In this example, the "x-network-status" header indicates the device has a good signal using a 3G network technology for transmitting the protocol request. Other example network-status headers can be easily understood, and several examples are shown below merely as non-limiting examples:

X-Network-Status: <2G/3G/4G/Wi-Fi>;<signal strength>;<Cellular QOS Parameters>
X-Network-Status: <High speed/Standard/Low speed>;<Signal strength value>
X-Network-Status: <Estimated Network Data Rate>
X-Network-Status: <wi-fi/cellular/wired>;<speed>
X-Network-Status: <802.11 a/b/g/n>

In a default configuration, he server may be configured to enable a predetermined subset of all available proxy services. For clarity, in the present disclosure, the term subset should be understood to include no proxy services, all proxy services, or any range in between. At block 304, in response to receiving the request containing the network-status header, the server selectively enables or disables proxy services based on the value of the network-status header. For example, the server may determine which, if any, proxy services should be enabled based on the connection information included in the network-status header.

The determination of which proxy services to utilize may be made based on any number of factors provided by the information in the network-status header. For example, if a device 201 has a 3G network connection with a strong signal, performing image transcoding may slow down a user's browsing experience because it could take longer for the server to transcode the image than to send the original image; therefore, if this connection information was received by the server, the server could be configured to disable the image transcoding service.

In another example, if a device 201 has a low resolution screen or is low on memory, it may be beneficial to perform image transcoding even if the device 201 has a strong, high speed connection. Therefore, if the connection and device information described in this example is received by the server, the server could be configured to enable image transcoding. As this example illustrates, there may be multiple factors to consider whether a particular service should be enabled or disabled. The server is configured to weigh the different variables to optimize when to enable each service.

In some embodiments, the server may be configured to change the degree to which a proxy service is performed. For example, an image may be transcoded into different resolutions and formats. Therefore, if a server receives connection information that requires a balance between fidelity and data usage, the server may be configured to transcode a 1280x720 pixel image to an 800x600 resolution rather than the smaller but generally lower quality 640x480 resolution.

The above examples illustrate a small subset of the possible combinations of device and connection information for the image transcoding proxy service. Configuring the server to selectively enable proxy services may include several possible combinations of device and connection information being taken into consideration. Furthermore, each proxy service may require a different variable weighting or analysis.

As a further example, a server may selectively enable a proxy service for streaming media at different media rates or codecs. If the network-status header indicates a high bandwidth network connection, then the server may enable a proxy service that delivers higher quality streaming media. Alternatively, if the network-status header indicates a low bandwidth network connection, then the server may enable a proxy service that delivers lower quality streaming media (which requires less bandwidth).

While there are some proxy servers and web servers that can adapt streaming media quality based on bandwidth at the client device, most utilize complicated algorithms or discovery tools to determine the appropriate streaming media quality. Advantageously, in the present disclosure, a client device informs the server of the network conditions within a header of the protocol request. The client device does not require an additional client agent to discover network conditions, nor does the client device need to explicitly request the streaming media quality (the client device only generically requests the media stream). The server interprets the header to identify the network conditions that were present at the time of the request and enables the proxy services with the appropriate streaming media quality.

At block 306, the request message, either unchanged or stripped of the network-status header, may be forwarded by the server to a remote system to fetch the requested content. A response message containing the requested content from the remote system is received by the server at block 308.

The server may perform block 304 at any point between blocks 302 and 310 and irrespective of blocks 306 and 308.At block 310, the server performs one or more of the proxy services enabled during the operation at block 304. After performing the proxy services, the server at block 312 sends a response to the communications device.

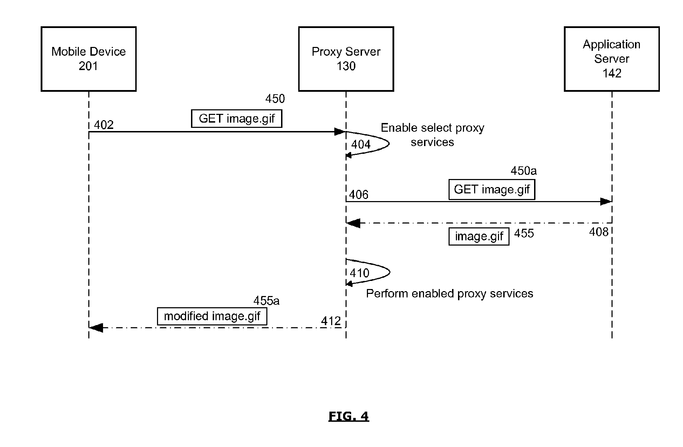

Figure 4 shows an example signalling diagram illustrating communications between a mobile device 201 and an application server 142 in accordance with one aspect of the present disclosure. In this example, a proxy server 130 is used in the communications system to relay messages between the application server 142 and the mobile device 201. The proxy server 130 may be an intermediate server, or may form part of the same machine that comprises the application server 142. In one embodiment, the proxy server 130 may be used so that the application server 142 can operate with legacy protocols not implementing the network-status header disclosed in the present disclosure. In Figure 4, the mobile device 201 is running a web browser 272 application. The user of the mobile device has triggered the web browser 272 to request "image.gif" from an application server 142 at a remote location.

At 402, the device 201 sends a protocol request 450 over a wireless network to proxy server 130. This request can be in the form of any communication message such as an HTTP message. The structure of a communication message is dependent on the specific application and protocol being used. Generally, these protocol messages include an instruction line or message type, a number of header fields and values for setting various parameters or communication settings, and a message body containing data or instructions.

In one embodiment, the protocol request 450 sent at 402 includes one or more defined headers, as well as a network-status header. In this example, the defined headers could contain information regarding the type of browser being used, or the types of media which would be acceptable for the response. A defined header refers to any header whose syntax and parameters have been standardized such that it can be recognized and used by any two devices utilizing the same protocol. These defined headers could be publicly defined (as they are for HTTP) or they could be proprietary headers which may only be recognized by specific client and server implementations.

Once the protocol request 450 is received by the proxy server 130, the network-status header provides connection or device information which the proxy server 130 can use, at 404, to determine which proxy services to enable as described above in Figure 3.

At 406, the proxy server 130 forwards the protocol request 450a over the network 124 to the application server 142. In some embodiments, the proxy server strips the network-status header before forwarding the protocol request 450a. In other embodiments, the network-status header is forwarded along with the protocol request 450a.

At 408, the application server 142 receives the request 450a and sends a response containing the requested "image.gif" back to the proxy server 130. In some embodiments, the determination of which proxy services to enable and the enablement of those services at 404 may occur concurrently with operations at 406 and 408. In other embodiments, operation 404 can be performed any time after operation 402 and before operation 410.

At 410, the proxy server 130 performs the enabled proxy services. For example, if the proxy server130 enabled compression and image transcoding at 404 based on the network-status header, the proxy server 130 would transcode and compress the file "image.gif" received from the application server 142 at 408. This modified image.gif would then be sent to the mobile device in the form of a protocol response 455a at 412.

In some embodiments, when there is a change to the state of the device 201 or connection over which the device 201 is connected to the network, the associated subsystems or processor update the device information 289 and connection information 290 stored on the device.

If the connection information or device information on the mobile device 201 changes, the mobile device 201 would communicate the new information to the proxy server in a subsequent protocol request (not shown) for a additional content, and the blocks/operations illustrated in FIGS. 3 and 4 would be repeated.

In some embodiments, the network-status header is included in all protocol requests. In other embodiments, the network-status header may be included only when the connection or device information has changed. With periodic connection and device updates, the proxy server may be configured to keep the same proxy services enabled since the last protocol request containing a network-status header was received.

In yet other embodiments, the network-status header may only be included in a protocol request when the device determines that the state of the device or connection warrants a consideration of the appropriate proxy services to apply.

In yet another embodiment of the present disclosure, the application on the mobile device 201 may send a protocol request containing a network-status header with a 'false' indicator. This will disable selective proxy servicing on the proxy server 132, and the proxy server will configure itself to perform a default set of services.

A mobile device 201 that sends a network-status header may still be compatible with proxy servers 132 and application servers 142 configured to operate in accordance with the protocol, but which may not recognize or may not be designed to selectively perform proxy services in accordance with the present description. In this situation, such a legacy proxy server 132 will ignore the network-status header and will forward the protocol request 350 on to the application server 142. The application server 142 will send a protocol response 353 back to the proxy server 132, which will forward the response to the mobile device 201.

In another embodiment of the present disclosure, the proxy server 132 is located on the same computer or system as the application server 142. In this embodiment, the remote server is running on the same system as the proxy server.

In yet another embodiment of the present disclosure, selective proxy servicing is done by the application server itself. In this embodiment, the device 201 sends a protocol request to the application server 142 including a network-status header. The application server 142 received the protocol request and determines which proxy services to enable based on the connection or device information. After performing the enabled proxy services, the application server 142 sends a protocol request back to the device 201.

While example embodiments described above are related to image transcoding or compression, the present disclosure should not be limited by the example embodiments. For example, proxy services related to caching, pre-fetching, code compilation, and other web accelerator tools are also contemplated when selectively performing proxy services at the server.

An advantage of the present disclosure over traditional proxy servers is that the protocol request may include the network-status header at the application layer in some embodiments. The network-status header can be added at the application layer by the requesting device when the protocol request is sent over the network. The receiving application server can interpret the message quickly and easily without additional processes to determine the potential network connection at the requesting device.

The above-described embodiments of the present disclosure are intended to be examples only. Alterations, modifications and variations may be effected to the particular embodiments by those skilled in the art having the benefit of the present disclosure without departing from the scope of the disclosure, which is defined by the claims appended hereto.

## Claims

1. A method for selectively performing proxy services on a server operable to perform one or more proxy services, the method comprising:
receiving (302) at the server a protocol request from a communications device (201) requesting data, the protocol request including one or more network-status headers indicating connection information (290) about the network connection used by the communications device (201) to transmit the protocol request;
configuring (304) the server to perform a subset of the one or more proxy services based on the connection information (290);
performing (310) the subset of the one or more proxy services to process the requested data; and
sending (312) to the communications device (201) the processed requested data.

2. The method of claim 1, further comprising:
receiving at the server a second protocol request from the communications device (201), the second protocol request including one or more network-status headers indicating second connection information, wherein the second connection information is associated with a different network connection used by the communications device (201) to transmit the second protocol request; and
configuring the server to perform a second subset of the one or more proxy services based on the second protocol request connection information.

3. The method of claim 1 or claim 2, wherein the server is a proxy server (130), and the method further comprises:
removing the network-status header from the protocol request to create a proxy protocol request;
sending (406) the proxy protocol request to a remote server (142) to fetch the requested data; and
receiving (408) the requested data from the remote server, prior to said operation of performing.

4. The method of any preceding claim, wherein the one or more proxy services are selected from the group consisting of image transcoding, filtering, JavaScript compilation, compression, pre-fetching, caching and video stream decoding.

5. The method of any preceding claim, wherein configuring the server to enable a subset of the one or more proxy services comprises changing the degree to which a proxy service is performed.

6. The method of any preceding claim, wherein the connection information (290) comprises a connection type and a signal strength.

7. The method of any preceding claim, wherein the one or more network-status headers include device information (289) or device settings, and wherein configuring the server to enable a subset of the one or more proxy services is further based on the device information (289) or the device settings.

8. The method of any preceding claim, wherein the protocol is an application layer protocol, a session layer protocol, a transport layer protocol, Hypertext Transfer Protocol (HTTP), or Wireless Application Protocol (WAP).

9. The method of any preceding claim, wherein the communications device (201) is a mobile device and wherein the mobile device is connected to the server over at least one wireless network (101).

10. A method in a communications device (201) operable to transmit requests for content to a server, the method comprising:
transmitting (402) from the communications device (201) to the server a first protocol request, the first protocol request including one or more network-status headers, wherein the one or more network-status headers include connection information (290) about the network connection used by the communications device to transmit the protocol request; and
receiving (412) a first protocol response comprising the requested content, wherein the requested content is selectively processed according to a subset of proxy services based on the connection information (290) included in the first protocol request.

11. The method of claim 10, further comprising:
detecting a change in the connection information (290); and
transmitting from the communications device (201) to the server a second protocol request, the second protocol request including one or more network-status headers, the one or more second protocol request network-status headers including the changed connection information (290).

12. The method of claim 10 or claim 11, wherein the protocol is Hypertext Transfer Protocol (HTTP) or Wireless Application Protocol (WAP).

13. The method of any of claims 10 to 12, wherein the communications device (201) is a mobile device and wherein the mobile device is connected to the server over at least one wireless network (101).

14. The method of any of claims 10 to 13, wherein the server is a proxy server (132) or an application server (142).

15. A device comprising:
a processor (240);
memory; and
a protocol communications module (280) stored in memory which, when executed by the processor (240), configures the processor (240) to perform the method of any of claims 1 to 14.

## Amended claims

### Amended claims in accordance with Rule 137(2) EPC.

**1.** A method for selectively performing proxy services on a server operable to perform one or more proxy services, the method comprising:
receiving (302) at the server a protocol request from a communications device (201), the protocol request including a request for requested data and further including one or more network-status headers indicating connection information (290) about the network connection used by the communications device (201) to transmit the protocol request;
configuring (304) the server to perform a subset of the one or more proxy services based on the connection information (290);
performing (310) the subset of the one or more proxy services to process the requested data; and
sending (312) to the communications device (201) the processed requested data.

**2.** The method of claim 1, further comprising:
receiving at the server a second protocol request from the communications device (201), the second protocol request including one or more network-status headers indicating second connection information, wherein the second connection information is associated with a different network connection used by the communications device (201) to transmit the second protocol request; and
configuring the server to perform a second subset of the one or more proxy services based on the second protocol request connection information.

**3.** The method of claim 1, wherein the server is a proxy server (130), and the method further comprises:
removing the network-status header from the protocol request to create a proxy protocol request;
sending (406) the proxy protocol request to a remote server (142) to fetch the requested data; and
receiving (408) the requested data from the remote server, prior to said operation of performing.

**4.** The method of claim 1, wherein the one or more proxy services are selected from the group consisting of image transcoding, filtering, JavaScript compilation, compression, pre-fetching, caching and video stream decoding.

**5.** The method of claim 1, wherein configuring the server to enable a subset of the one or more proxy services comprises changing the degree to which a proxy service is performed.

**6.** The method of claim 1, wherein the connection information (290) comprises a connection type and a signal strength.

**7.** The method of claim 1, wherein the one or more network-status headers include device information (289) or device settings, and wherein configuring the server to enable a subset of the one or more proxy services is further based on the device information (289) or the device settings.

**8.** The method of claim 1, wherein the protocol is an application layer protocol, a session layer protocol, a transport layer protocol, Hypertext Transfer Protocol, HTTP, or Wireless Application Protocol, WAP.

**9.** The method of claim 1, wherein the communications device (201) is a mobile device and wherein the mobile device is connected to the server over at least one wireless network (101).

**10.** The method of claim 1, the protocol request is received from a browser on the communications device without the use of an additional client agent to discover network conditions.

**11.** A method for use in a communications device (201) operable to transmit requests for content to a server, the method comprising:
transmitting (402) from the communications device (201) to the server a first protocol request, the first protocol request including a request for requested data and further including one or more network-status headers, wherein the one or more network-status headers include connection information (290) about the network connection used by the communications device to transmit the protocol request; and
receiving (412) a first protocol response comprising the requested content, wherein the requested content is selectively processed according to a subset of proxy services based on the connection information (290) included in the first protocol request.

**12.** The method of claim 11, further comprising:
detecting a change in the connection information (290); and
transmitting from the communications device (201) to the server a second protocol request, the second protocol request including one or more network-status headers, the one or more second protocol request network-status headers including the changed connection information (290).

**13.** The method of claim 11, wherein the protocol is Hypertext Transfer Protocol, HTTP, or Wireless Application Protocol, WAP.

**14.** The method of claim 11, wherein the communications device (201) is a mobile device and wherein the mobile device is connected to the server over at least one wireless network (101).

**15.** The method of claim 11, wherein the server is a proxy server (132) or an application server (142).

**16.** A communications device comprising:
a processor (240);
memory; and
a protocol communications module (280) stored in memory which, when executed by the processor (240), configures the processor (240) to perform the method of any of claims 11-15.

**17.** A server comprising:
a processor;
memory; and
a protocol communications module stored in memory which, when executed by the processor, configures the processor to perform the method of any of claims 1-10.
